# EUROPEAN PATENT APPLICATION

(11) **EP 2 717 432 A1**
(43) Date of publication of application: **09.04.2014**
(21) Application number: 12187407.7
(22) Date of filing: 05.10.2012
(51) Int. Cl.: H02K 3/12, H02K 3/28, H02K 17/24, H02K 17/42

(54) **Rotor structure and electrical machine**

(71) Applicant: ABB Technology AG, 8050 Zürich (CH)
(72) Inventor: Lepa, Erko, 00380 Helsinki (FI)
(74) Representative: Kolster Oy Ab

(57) **Abstract**

Rotor of a wound rotor induction machine comprising multiple phase wave windings comprising two or more winding branches in each phase. In the rotor at least one branch of the windings is connected to delta connection and at least one branch of the windings is left out of the delta connection.

## Description

### FIELD OF THE INVENTION

The present invention relates to wound rotor induction machines, and more particularly to rotor windings of such machines.

### BACKGROUND OF THE INVENTION

Wound rotor induction machines are electrical rotating machines in which the rotor comprises windings. One type of such a machine is a double-fed induction machine, which is commonly used as a generator (DFIG). The most common type of double-fed induction machine rotor has a two-layer, bar-type winding owing to the practicality and simplicity of this winding type. Bar-type winding simplifies the manufacture, allows better utilization of the slot space owing to a decrease in the quantity of insulation and tolerates centrifugal forces that appear at high rotation speeds.

The basic theory of this winding type is treated in the literature. However, the dimensioning of the open-circuit voltage is not covered extensively. The dimensioning of open-circuit voltage is not treaded in literature since traditionally it has been considered that as long as the open circuit voltage does not exceed the insulation voltage threshold value, the value of the open circuit voltage is not that important.

When double-fed induction machines are operated with frequency converters that control the slip of the machine, the correctly and accurately dimensioned open-circuit voltage plays an important role in dimensioning the complete drive system.

The rotor voltage of a double-fed induction generator (DFIG) follows a V-shaped curve that can be considered proportional to slip. The rotor voltage is at zero when the rotor is in synchronism with the stator voltage and the slip is thus zero. When the slip is increased or decreased, the rotor voltage changes linearly. The open circuit voltage corresponds to a voltage generated in the rotor windings when the rotor is not rotating or is rotating twice at its nominal speed (i.e. slip is either -1 or 1). The slip of DFIG can typically vary from -30% to 30% (corresponding to rotational speed range of 1000...2000 rpm when rated speed is 1500 rpm). A typical value for open-circuit voltage is 1800 V in a megawatt class DFIG.

The dimensioning of the open circuit voltage is important in that the voltage of the rotor is in the specified range when the rotational speed (slip) of the rotor changes within the allowable limits. As mentioned above, the voltage of the rotor increases when the slip is increased from zero or decreased from zero, and it reaches its highest allowable value when the slip is at its highest allowable value. As the change of rotor voltage is linear with respect to the slip, the correctly set open-circuit voltage assures that the rotor voltage at the highest slip is at a specified value. The rotor voltage at the highest slip also defines the size of the frequency converter used in the control of the rotor. Thus, the open circuit voltage has to be dimensioned in such a manner that the voltage at the highest slip can be operated by using a frequency converter. This means that the rating of the frequency converter sets at least some design boundaries for dimensioning the open circuit voltage of the double-fed induction machine rotor.

A typical range of open-circuit voltage is 1800 V to 2200 V with a relatively small tolerance for a high powered DFIG. When other limitations relating to rotor current, machine losses and slot combinations are taken into account, the open-circuit voltage requirement is not easily met by using traditional design approaches.

Design approaches commonly used for dimensioning the open-circuit voltage include changing the number of slots occupying the windings. Traditional two-layer winding usually has one winding turn (or coil) per one slot. For increasing the open circuit voltage, the number of slots is increased. This method is very effective but it is limited by many other factors. For example fractional winding cannot be used, the ratio between stator and rotor windings must be close to 1.25 in order to avoid undesirable radial forces, teeth must tolerate mechanical loads and the coil-end length must be as short as possible.

Another approach for dimensioning the open-circuit voltage is to use star or delta connection in rotor winding. The rotor voltage is theoretically changed by a factor of 1.73 by changing the connection type.

Further, the open-circuit voltage may be dimensioned by using designs in which the number of rotor bars in a slot is changed. The most common bar structures are two bars in one slot or four bars in one slot. An increase in the number of bars in a slot increases the number of effective turns in the winding, and thereby increases the open-circuit voltage.

### BRIEF DESCRIPTION OF THE INVENTION

An object of the present invention is to provide a rotor winding structure so as to overcome the above problems. The object of the invention is achieved by a rotor which is characterized by what is stated in the independent claim. The preferred embodiments of the invention are disclosed in the dependent claims.

The invention is based on the idea of connecting the rotor winding in such a way that at least one branch of the winding is connected to delta connection. In known winding types the phases are connected in delta connection such that the end of each phase is connected to the beginning of another phase, and thereby a delta connection is formed. In the present invention the ends of the phase windings are electrically connected in the middle of another phase winding, and one or more branches of the windings are left out of the delta connection. The connection point for delta connection in the middle of another phase winding is between the branches of the winding. The windings of a wave winding comprise winding branches which form a known part of the total winding and traditionally the branches are connected in series for forming the total winding.

An advantage of the invention is that the dimensioning of a wound rotor induction machine is easier with respect to open-circuit voltage. The structure of the invention gives the designer of the machine more options in achieving required electrical properties. Some embodiments of the invention further help in saving material costs, since the cross-sectional area of the rotor bars can be made smaller than in the prior art rotors.

### BRIEF DESCRIPTION OF THE DRAWINGS

In the following the invention will be described in greater detail by means of preferred embodiments with reference to the accompanying drawings, in which
Figure 1 shows end connections of an embodiment,
Figure 2 shows bars in rotor slots of the embodiment of Figure 1,
Figure 3 shows end connections of another embodiment,
Figure 4 shows bars in rotor slots of the embodiment of Figure 3,
Figure 5 shows end connections of another embodiment,
Figure 6 shows bars in rotor slots of the embodiment of Figure 5,
Figure 7 shows end connections of another embodiment,
Figure 8 shows bars in rotor slots of the embodiment of Figure 7,
Figure 9 shows end connections of another embodiment,
Figure 10 shows bars in rotor slots of the embodiment of Figure 9,
Figure 11 shows end connections of another embodiment,
Figure 12 shows bars in rotor slots of the embodiment of Figure 11.

### DETAILED DESCRIPTION OF THE INVENTION

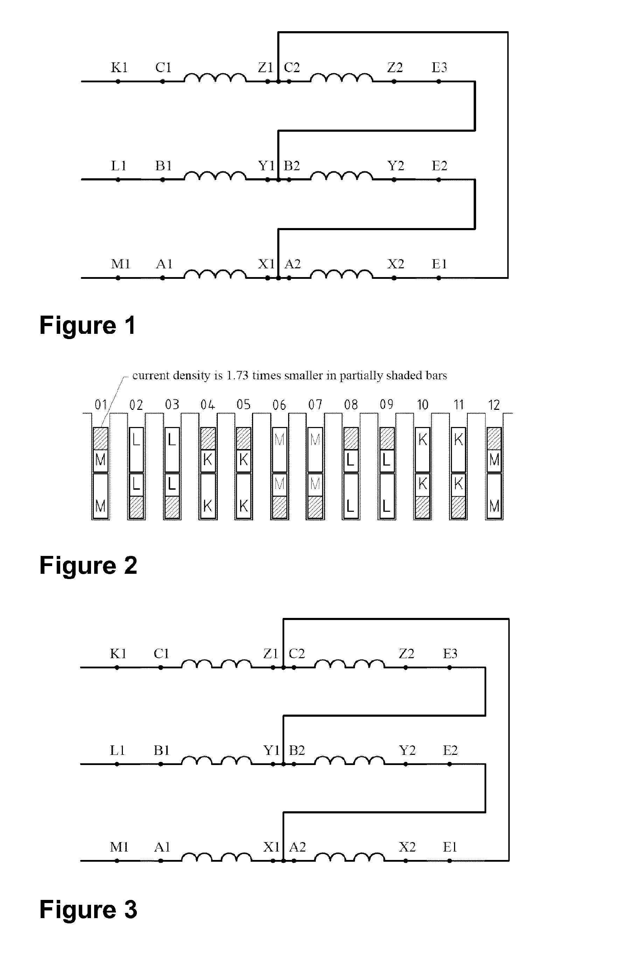

Figure 1 shows end connections of an embodiment of the present invention. In this embodiment each phase winding of the three-phase rotor consists of two branches. The inputs to the phases are marked M1, L1 and K1, and the M phase consists of branches A1-X1 and A2-X2. Figure 1 further shows an end connection point E1 of the M phase. The L phase comprises branches B1-Y1 and B2-Y2 and an end connection point E2, while the K phase has branches C1-Z1 and C2-Z2 and an end connection point E3.

According to the disclosure, at least one branch of the winding is connected in delta connection. In view of Figure 1, branches A2-X2, B2-Y2 and C2-Z2 are connected in a delta connection. The delta connection is formed by connecting the ends of each winding to a point between the branches of another phase. In the embodiment of Figure 1 the end point E1 of phase M is connected between branches of phase K, the end point E3 of phase K is connected between branches of phase L, and the end point E2 of phase L is connected between branches of phase M.

The open circuit voltage change due to such connection is theoretically 1.267 times smaller than in star-connected windings and 1.365 times higher than in delta-connected windings.

If, for example, the machine is connected to star connection, the calculated open circuit voltage is 2290 V and the rotor current at a certain point is 500 A, and after transformation from star connection to the embodiment of Figure 1, the open circuit voltage would theoretically become 2290/1.267 = 1807 V and the current 500x1.267 = 633.5 A.

In another example the machine is connected to delta, the calculated open circuit voltage is 1320 V and the rotor current at a certain point is 500 A. After transformation from delta to the embodiment of Figure 1, the open circuit voltage would become theoretically 1320x1.365 = 1802 V and the current 500/1.365 = 366 A.

As can be seen from the above calculations, the current in one bar in slot differs 1.73 times to other bar in slot. Figure 2 shows the bars in slots of the embodiment of Figure 1, in which the smaller currents of bars are shown as shaded portions of bars. Figure 2 also shows the markings K, L, M indicating to which phase the bars belong. Since the current is smaller in certain bars, the bars may be made smaller in the cross-sectional area. This requires some laminates to be added to the slots because the physical arrangement of the bars requires that the height of the lowest layer of bars be equal. As the bars of a wave winding are typically made of copper that is bent to a specific shape, it is practically impossible to structure the windings when the layers are of different heights. Another possibility for using different cross-sectional areas of bars is to structure the slots in the rotor to have unequal slot heights.

According to an embodiment of the invention, each phase winding comprises four branches, and two of the branches of each phase are connected in delta connection. The end connections of this embodiment are shown in Figure 3. Figure 3 is similar to Figure 1 with the exception that, for example, in phase M, branch A1-X1 is made of two series-connected branches. Similarly, the other branches shown in Figure 3 as one branch are made of two branches connected in series.

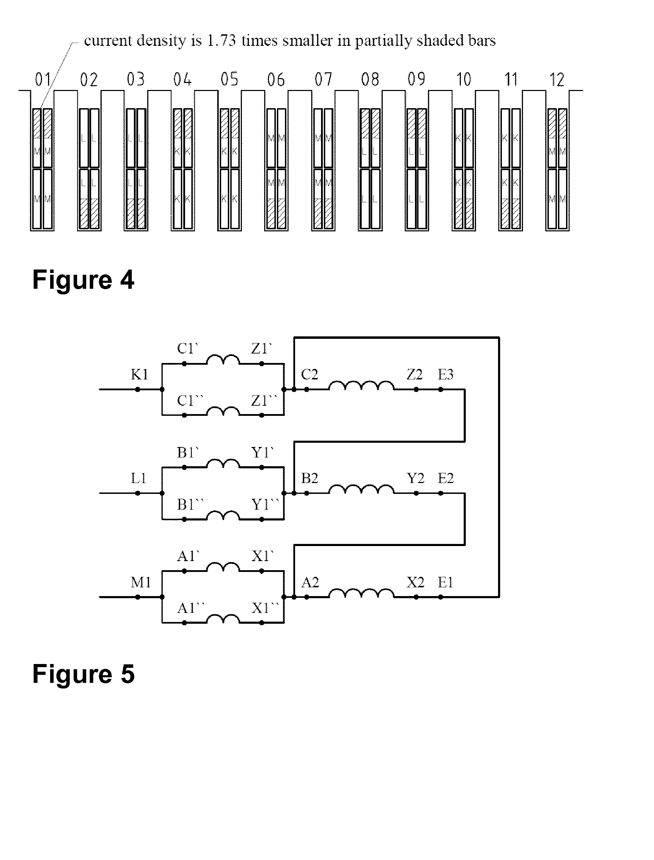

In Figure 3 the delta connection is formed with two branches of each phase connected in series. That is to say that two branches of each phase are connected at the end of other two branches, and thereby a delta connection is formed. The difference between the embodiments of Figures 1 and 3 is that the embodiment of Figure 3 forms a structure in which four bars are in one slot, as can be seen from Figure 4. Figure 4 shows an embodiment in which the bars are situated in such a way that there are two of them side by side and two above each other, i.e. in a 2x2 matrix fashion. Figure 4 also shows the markings K, L, M indicating to which phase the bars belong. As further seen, the current densities are similar to those of the embodiment of Figures 1 and 2.

In another embodiment of the invention, in which four branches are used for each phase, two branches are connected in parallel and the other two in series. The series-connected branches are further connected in delta connection. This embodiment is illustrated in Figure 5, which shows the end connections of the winding. As mentioned, each phase winding comprises four branches. For example phase M1 has branches A1'-X1', A1"-X1" and A2-X2. The branch A2-X2 has two branches connected in series.

Branches A1'-X1' and A1"-X1" are connected in parallel and this parallel connection is further connected in series with branch A2-X2. Each phase is formed with similar connections. Further, a delta connection is formed by connecting the series-connected branches of each phase to each other in such a way that the end of branch A2-X2 is connected to the start of branch B2-Y2, and the end of branch B2-Y2 is connected to the start of branch C2-Z2, the end of which branch is connected to the start of branch A2-X2, and thereby a delta connected system is formed.

As an example of the embodiment of Figure 5, let us consider the following. When a machine is connected to star connection, the calculated open-circuit voltage is 2284 V and the rotor current at a certain point is 500 A, and after transformation from star connection to the connection of the embodiment of Figure 5, the open circuit voltage becomes theoretically 2284/1.1267 = 1802 V and the current becomes 500x1.1267 = 633.5 A. In the bars that are connected in parallel, the current density is 50% of the line current, and in the bars that are connected in series, the current density is 57.8% of the line current. Thus, the current density difference between bars of the same winding is theoretically 7.8%.

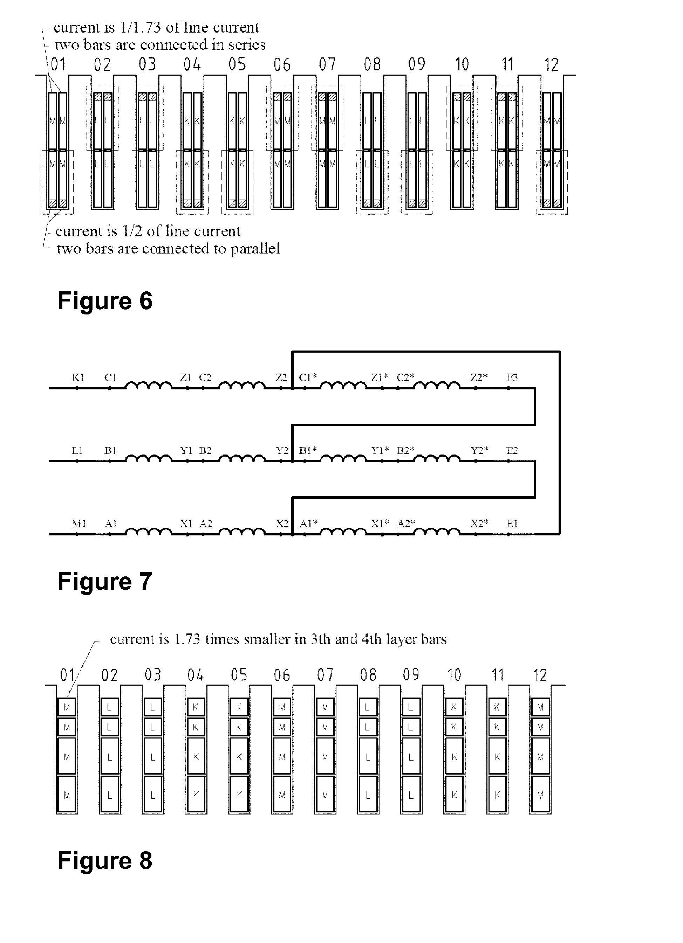

Figure 6 shows the bars in the slot in the embodiment of Figure 5. The bars that have the shaded areas are the parallel-connected bars indicating the lower current density and the two other bars in each slot are connected in series. Figure 6 also shows the markings K, L, M indicating to which phase the bars belong. The embodiment of Figure 5 thus produces a winding system in which the current densities are divided quite evenly.

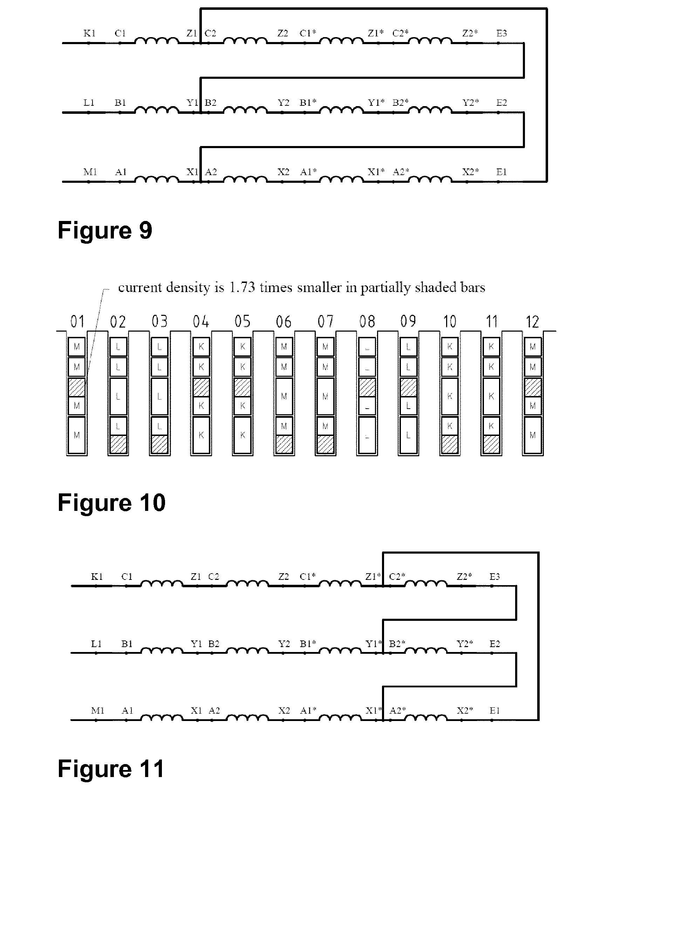

A winding type which comprises four branches in each phase and in which the bars in a slot are arranged on top of each other gives at least three different possibilities of dimensioning the open circuit voltage. The alternatives relate to the point in which the delta connection is made. The delta connection can be made from the centre of the branches (Figure 7), after the first branch (Figure 9) or before the last branch (Figure 11).

Figure 7 shows an embodiment in which the delta connection is made in the centre of the branches, i.e. two branches are on both sides of the connection point. The branches of phase M are labelled as A1-X1, A2-X2, A1'-X1' and A1"-X1 " and phases L and K respectively. All branches of a phase are connected in series and the end points of each series connection of branches is connected to the centre point of another phase such that each end point is connected to one other phase. After the delta point the current decreases 1.73 times and due to the physical arrangement of wave windings the first two branches are situated first in the slots. As the two last branches carry a smaller current, the cross sectional area of these bars can be made smaller, as is shown in Figure 8. The arrangement of bars in slots does not require any additional structures in the slots or specifically modified slots, since the heights of the bars in each layer are equal. Figure 8 also shows the markings K, L, M indicating to which phase the bars belong.

In the embodiment of Figure 9 the delta connection is formed after the first branch of each phase winding. The resulting current densities are shown in Figure 10 where it can be seen that three of the bars in one slot carry a smaller current than the fourth one. The cross sections of the two upper bars can be made smaller and the shaded portions of the lowest bars show where the current density is as low as in the upper bars. This embodiment requires special structures for aligning the bar layers. Figure 10 also shows the markings K, L, M indicating to which phase the bars belong.

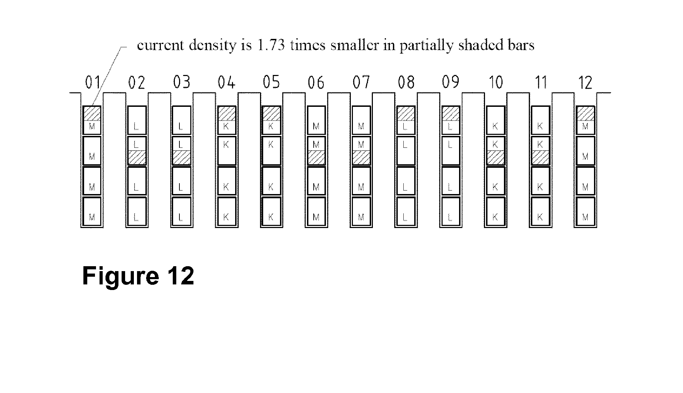

In the embodiment of Figure 11, the delta connection is formed before the last branch of each phase winding. This structure leads to a situation in which the current density of one bar in a slot is 1.73 times lower than in the other bars. The shaded bars in Figure 12 show the bars with the lower current density. As seen, the lower current densities are situated in the two upper bars. Figure 12 also shows the markings K, L, M indicating to which phase the bars belong.

Although in some of the embodiments above some special structures may be needed for aligning the bar layers, these embodiments may still be highly usable in some situations.

In the above the invention is described mostly in connection with a rotor of a double-fed induction machine. The rotor structure of the invention is a wound rotor structure and the structure is not limited to a specific kind of machine.

The present invention also relates to an electrical machine, such as a motor or generator, having the rotor structure of the invention. Such a machine is typically a double-fed induction generator with slip rings. However, the electrical machine having the rotor of the present disclosure may also be a motor for driving a load.

It will be obvious to a person skilled in the art that, as the technology advances, the inventive concept can be implemented in various ways. The invention and its embodiments are not limited to the examples described above but may vary within the scope of the claims.

## Claims

1. Rotor of a wound rotor induction machine comprising multiple-phase wave windings comprising two or more winding branches in each phase, **characterized in that**
at least one branch of the windings is connected to delta connection and at least one branch of the windings is left out of the delta connection.

2. Rotor according to claim 1, **characterized in that** each phase of the winding comprises two branches and the delta connection is formed by connecting one branch of each phase to delta connection.

3. Rotor according to claim 2, **characterized in that** the winding is a double-layer wave winding.

4. Rotor according to claim 1, **characterized in that** each phase of the winding comprises four branches and the delta connection is formed by connecting two series-connected branches of each phase to delta connection.

5. Rotor according to claim 4, **characterized in that** two of the four branches of each phase winding are connected in series.

6. Rotor according to claim 4, **characterized in that** two of the four branches of each phase winding are connected in parallel.

7. Rotor according to claim 1, **characterized in that** each phase of the winding comprises four branches and the delta connection is formed by connecting three series-connected branches of each phase to delta connection.

8. Rotor according to claim 1, **characterized in that** each phase of the winding comprises four branches and the delta connection is formed by connecting one branch of each phase to delta connection

9. Rotor according to any of the previous claims 4 - 8, **characterized in that** the rotor comprises four bars in each rotor slot, arranged on top of each other or two side by side and two on top of each other.

10. Rotor according to any of the previous claims 1 - 9, **characterized in that** the rotor is a rotor of a double-fed induction machine.

11. Electrical machine comprising a rotor structure according to any of the previous claims 1 - 10.
